# EUROPEAN PATENT SPECIFICATION

(11) **EP 0 856 257 B1**
(45) Date of publication and mention of the grant of the patent: **14.11.2001**
(21) Application number: 98300726.1
(22) Date of filing: 02.02.1998
(51) Int. Cl.: A22B 5/00

(54) **Method for evisceration of carcasses**
Verfahren zum Ausnehmen von Schlachttierkörpern
Procédé pour l'éviscération de carcasses animales

(30) Priority: 03.02.1997 DK 12097
(43) Date of publication of application: 05.08.1998
(73) Proprietor: Slagteriernes Forskningsinstitut, 4000 Roskilde (DK)
(72) Inventor: Nielsen, Jens Ulrich, 2880 Bagsvaerd (DK); Druekaer, Arne, 3630 Jaegerspris (DK)
(74) Representative: Bayliss, Geoffrey Cyril

(56) References cited:
- EP-A- 0 506 619
- EP-A- 0 509 613
- EP-A- 0 601 812
- EP-A- 0 755 628
- WO-A-90/06685
- WO-A-92/22210
- US-A- 3 916 484
- US-A- 3 940 998
- US-A- 5 083 971
- US-A- 5 152 713
- CHRISTENSEN ET AL.: "Visual Guidance of a Pig Evisceration Robot using Neural Network" PATTERN RECOGNITION LETTERS, vol. 17, 1996, pages 345-355, XP000589629 Elsevier Science, NL

## Description

The present invention relates to a method for evisceration of carcasses such as pig carcasses which are conveyed on a slaughter line suspended in gambrels, wherein the abdomen of the carcass is cut open, the hams are divided, the fat end is loosened, the intestines of the carcass are removed, the diaphragm and leaf fat are loosened, and the plucks are removed.

The evisceration of pig carcasses is performed in a number of subprocesses carried out by operators. Certain of the subprocesses, such as fat end loosening and brisket opening, can be performed by means of automatic equipment or by worker-operated machines. Nevertheless, much manpower is required for the evisceration process.

The order of the individual subprocesses may vary from company to company, but the requirement for manpower will not be reduced significantly. Besides, several of the operations are heavy work for the operators.

An object of the present invention is to provide a method having better hygiene, a better working environment, and a lower need for manpower than is the case by a traditional evisceration process. Besides, it is a requirement that the same products are obtainable (plucks, intestines, leaf fat, etc.) as by a traditional process and that the existing conveyor systems for intestines and plucks can form part of the process.

The method for evisceration of carcesses according to the invention, is characterized in that diaphragm, leaf fat and intestines are loosened by machine while the intestines and the plucks are inside the carcass, the diaphragm and leaf fat being loosened by means of a structure with a set of hoops, which is automatically placed below the diaphragm and is then led upwards, so that diaphragm and leaf fat are loosened from the interior of the carcass, in that the intestines and the plucks are removed from the carcass in one piece, after the diaphragm, leaf fat and intestines have been loosened, and in that the intestines and the plucks are separated from each other by cutting.

In the method according to the invention plucks and intestines are separated when their connection is outside the carcass, viz. not inside the carcass as is the case in the traditional process. Furthermore, there is no need for manual loosening of the intestines and lifting them out before the diaphragm is loosened. In the method according to the invention the diaphragm, the leaf fat and the intestines are loosened by machine while the intestines and the plucks are inside the carcass, and the separation of intestines and plucks is only performed when the intestines and plucks (inclusive of diaphragm and leaf fat) have been loosened and have been transferred to e.g. a gut pan that is located underneath the abdomen of the carcass. The separation of intestines and plucks can be performed manually or mechanically. Hygiene is improved considerably when the separation of intestines and plucks is not made until these have been removed from the carcass.

In EP 0 755 628 A1 (Stork R.M.S. B.V.) there is a description of a method and an equipment for release of intestines of a carcass which has been cut open in the abdomen. An element having the shape of a hoop is placed between the peritoneum and the abdominal wall, and is moved substantially parallel to the spinal column whereby the peritoneum with organs arranged therein is at least partially released from the abdominal wall. The hoop element consists of two semi-hoops the free ends of which are practically connected with each other in the operative position. This design makes it possible to release almost completely the peritoneum with organs from the abdominal wall in one single movement of release.

The Danish Patent No. 166.857 (Slagteriernes Forskningsinstitut) describes a method wherein the respiratory passages and the intact alimentary canal are loosened and removed from the carcass in one coherent piece from mouth to rectum. After the abdomen of the carcass has been cut open, the intestines are loosened and lifted out of the abdominal cavity, the diaphragm is cut free, and the intestines and plucks are extracted fully from the carcass and removed along with the head, which has previously been cut free from the carcass. The intact set of head, plucks and alimentary system is then placed in a special fixture or in a room-divided pan placed underneath the carcass. Only then are the viscera separated. The leaf fat is removed in a special process. The process described results in a substantial increase of the burden of heavy work for the operators.

EP-A- 0 601 812 (University of Bristol) describes a method for removing viscera from pig carcasses. The carcass is cut open at the abdomen and breast. Then, the fat end is loosened. A cutting tool with two collecting fingers is next moved along the spinal column, cutting free the intestines which fall away through the abdominal opening. The tool provides an opening in the diaphragm, through which vertical knives are inserted and moved round the inside of the carcass cutting out the diaphragm. A brush device tears out the lungs of the carcass, and finally the head is cut off. Leaf fat is not loosened or extracted.

Favourable embodiments of the method according to the invention are stated in the claims 2-19.

In connection with the removal process, the intestines can be placed in a gut pan located underneath the abdomen of the carcass.

According to a preferred embodiment the plucks are removed from the carcass while or after the intestines are placed in a pan. The plucks may then be pulled up above the level of the pan, and subsequently the plucks and intestines are separated by cutting the connection between the plucks and the intestines.

In another embodiment trachea and oesophagus are cut through, while the intestines and the plucks are still inside the carcass. Immediately after said cutting the trachea/oesophagus can be extracted from the carcass and placed on a hook that is being conveyed by a plucks conveyor. After the removal the hook can be led to such a distance from the gut pan that the plucks are stretched between the hook and the intestines, and then the connection between the plucks and the intestines can be cut through.

The following subprocesses 1-4 can be performed:
1. loosening of the diaphragm, leaf fat, intestines and perhaps plucks by means of mechanical equipment,
2. removal of intestines from the carcass to a gut pan, while retaining the connection between the plucks and the intestines,
3. removal of the plucks from the carcass, and
4. separation of the plucks from the intestines outside the carcass.

The following subprocesses 1-6 can be performed:
1. through-cutting of trachea and oesophagus,
2. extraction of trachea/oesophagus to hook on plucks conveyor,
3. loosening of intestines, leaf fat and diaphragm by means of mechanical equipment,
4. removal of intestines from the carcass to a gut pan, while retaining the connection between the plucks and the intestines,
5. removal of the plucks from the carcass, and
6. separation of the plucks from the intestines outside the carcass.

Loosening of diaphragm, leaf fat, intestines and perhaps plucks, as well as removal of intestines to a gut pan, can be performed by machine in the same work station. The free-cutting of the fat end, separation of the pubic bone and dividing of hams are preferably performed by machine in another work station which is placed up-stream of the first work station.

The intestines and the diaphragm part at the spinal column may be loosened by means of another structure with a cutting tool which is automatically moved along the spinal column of the carcass, cutting free the intestines and cutting through said diaphragm part before, during or after loosening of diaphragm and leaf fat.

In the loosening process there may be used a set of hoops which are open at the section opposite the spinal column of the carcass over a distance of 1 to 5 cm.

In the process of loosening the intestines and the diaphragm part at the spinal coloumn there may be used a tool mainly having the shape of a pair of tongs with jaws which can be closed and have cutting edges on the inwardly directed sides of the jaws.

The tool may in its open position be led with the jaws at the front down to the diaphragm part at the spinal column of the carcass, the jaws of the tool may be closed, and the tool may then be led upwards along the spinal column cutting through the connections of the diaphragm and the intestines to the spinal column. The cutting edges of the inwardly directed sides of the jaws may form a "V" in the closed position of the jaws. The jaws of the tool may have a point or a sharp edge on the outside. Preferably, the tool has a drive device to move the legs of the tongs between an open position, in which the jaws of the tongs are at a distance from each other, and a closed position, in which the jaws are close together.

The height of the diaphragm and the organs above the floor varies from carcass to carcass, and this may affect the insertion of the various tools into the carcass and their functioning. Therefore, the slaughter line is preferably provided with a measuring station for determination of the level of an anatomical part of the carcass, e.g. the height of the forelegs or "armpits" above the floor. When this has been determined, the position of e.g. the diaphragm and organs can be computed very precisely.

An embodiment of the method according to the invention is characterized in that the position of the holes behind the forelegs ("armpits") of the carcass is measured automatically, and that the set of hoops is automatically placed in its initial and/or working position based on the measurement.

The measurement may be performed by means of sensor arms, which are connected to a position indicator and are moved automatically down along the abdominal side of the carcass, said sensor arms being designed to send a signal registering the present signal of the position indicator at the moment of contact when the sensor arms contact the holes behind the forelegs of the carcass.

A measurement will improve the operational accuracy and functioning of the tools significantly, as there may be large individual differences between carcasses, especially if the animals have been bred with a view to achieving optimum qualities for different markets.

In the present invention, a carcass is preferably a pig carcass.

Further details of the invention appear from the following examples and drawings, in which
- fig. 1 shows schematically an embodiment of the method according to the invention,
- fig. 2 shows equipment for the determination of the level of particularly the diaphragm in proportion to a fixed point (the gambrel or the slaughter line conveyor).
- fig. 3 shows a tool for cutting free the connections of the diaphragm and the intestines to the spinal column in a carcass.

### Example 1

This example describes the usual method used for eviscerating pig carcasses. The carcasses are conveyed on a slaughtering line, passing different, manned work stations.

The abdomen of the carcass is cut open manually by means of a knife. The opening starts with a cutting through rind and fat from the highest point between the hams and down to the breastbone, but without cutting through the inner part of the abdominal wall. The cut must follow the centre line of the abdomen exactly.

The genitals are cut off and then the abdominal wall itself is opened by a cut that runs from a point 10-15 cm below the hams and up between these.

The ham muscles can now be divided by a cut precisely in the middle.

The pubic bone is separated without damaging the underlying fat end, and the abdominal wall is cut through down to the breastbone.

After the bladder has been cut free, the intestines are turned out.

The fat end is cut free by means of a fat end loosener. The central part of the loosener is inserted into the fat end and a circular cut is made round the fat end. After the fat end has been cut free, it is extracted from the pelvic cavity while remaining in the hollow knife of the loosener, the intestines being pulled partially free from the spinal column. A knot is tied in the fat end to prevent the faeces from escaping.

The intestines are cut free. With one hand the operator tilts the stomach out of the abdominal cavity and cuts through the oesophagus near the stomach. The intestines are now free and can be placed in a gut pan for inspection and further processing.

The subsequent opening of the thoracic cavity may include manual pre-cutting of chest and neck and sawing of the breastbone. This operation can also be performed by means of a specially designed machine.

By the manual chest opening operation the fat and meat above the breastbone are cut through to the tip of the cartilage on the first joint of the bone. Scoring is made from here to the stick wound. The neck is cut through from stick wound to the angle of the jaws, where a cut is made through the layer of fat. From the stick wound a cut is made upwards through the cartilage to the first joint of the breastbone. A sawing operation is then made through the first joint and upwards.

The leaf fat and diaphragm are then released in the following way: The leaf fat is lifted to reveal the diaphragm, and a 4-5 cm long cut is made into this on either side, as close to the chest and abdominal wall as possible. The gall bladder is pulled from the liver. Leaf fat and diaphragm are released in one operation by the operator making an upwards breaking movement with his right and left arms. Alternatively, a specially designed machine can be used (diaphragm and leaf fat loosener).

The leaf fat is separated from the diaphragm.

The plucks are now extracted from the thoracic cavity, right down to the root of the tongue.
(The plucks may include tongue, throat, oesophagus, heart, lungs, diaphragm, liver and kidneys.)

The tongue is cut free from the carcass by means of a cut on either side of the tongue on the outer side of the hyoid bone, after which the tongue is cut completely free from the jaw, and a cut is made across the underside. The plucks are now free and suspended on a hook which is transported by a plucks conveyor. The plucks are moved on for veterinary inspection and further processing.

The evisceration of the carcass has now been completed. These working operations involve 11 operators at a slaughtering rate of 320 carcasses per hour.

The carcass is moved on along the slaughtering line to be split in halves and divided up into cuts.

### Example 2

This example describes an embodiment of the method according to the invention, wherein equipment for automatic release of the diaphragm and removal of the intestines to a gut pan is used. Moreover, a plucks conveyor is used, which runs a certain course in order to stretch the plucks before the connection between the intestines and the plucks is subsequently cut through.

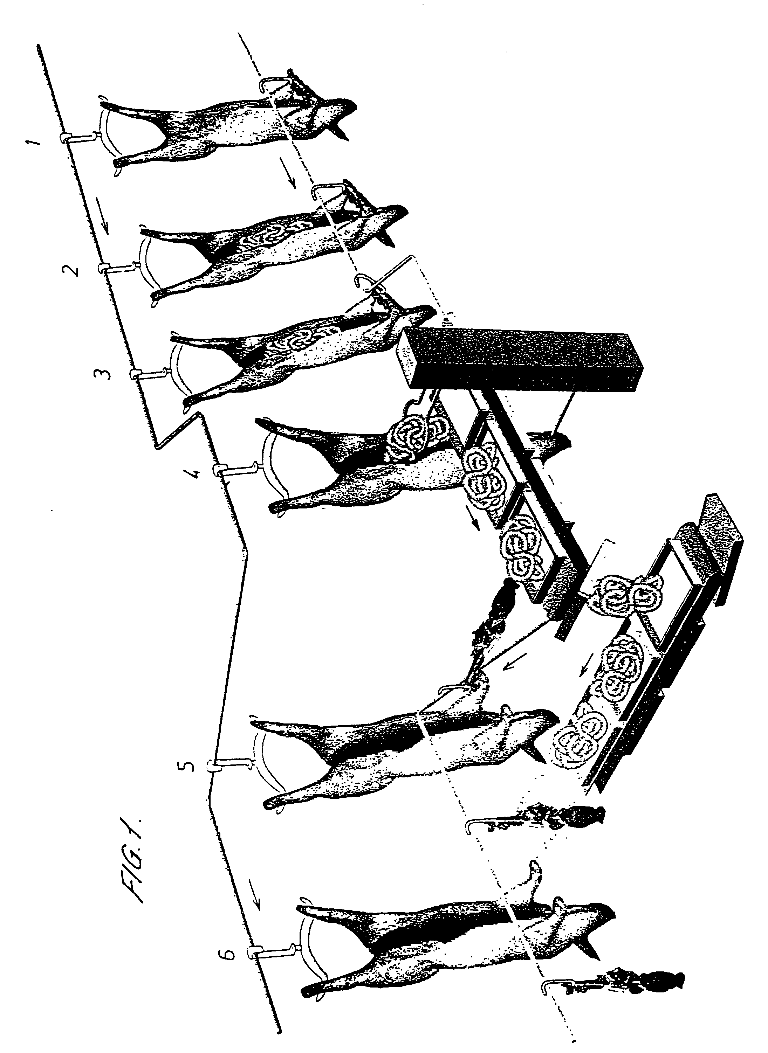

This process is illustrated in fig. 1, which is a schematic outline of the essential operations of work.

The process starts when the thoracic cavity of the carcass is opened in the usual way by an operator or by means of a conventional cutting machine.

Then the jaws and tongue are cut free manually in a known way. After the cutting, the operator extracts tongue with trachea and oesophagus from the carcass and places them on a hook that is conveyed by the plucks conveyor at 1 in fig.1. Alternatively, the trachea/oesophagus may be cut through and then placed on hook. The hook is placed behind the larynx.

The process of cutting through and extracting the trachea/oesophagus may be performed in the station mentioned below for loosening diaphragm, leaf fat and intestines.

If for sanitary reasons the tongue shall be kept away from the plucks, the operator can cut off the tongue and, if desired, place it on another hook on the plucks conveyor.

The abdomen is then cut open in the usual, manual way, and the genitals are cut off at 2 in fig.1. The intestines are not turned out from the abdominal cavity (as they are by the traditional evisceration techniques), but remain inside the carcass.

A pre-cut is made in the diaphragm (like in the process according to example 1). Then an operator cuts the fat end free by means of a fat end loosener, and the hams are divided in the usual way at 3 in fig.1.

The carcass is next transported to the work station marked 4 in fig.1. The station includes automatic equipment for release of diaphragm, leaf fat, and intestines, while the intestines are still inside the carcass, and for extraction of the intestines to a gut pan after the release operation has been performed.

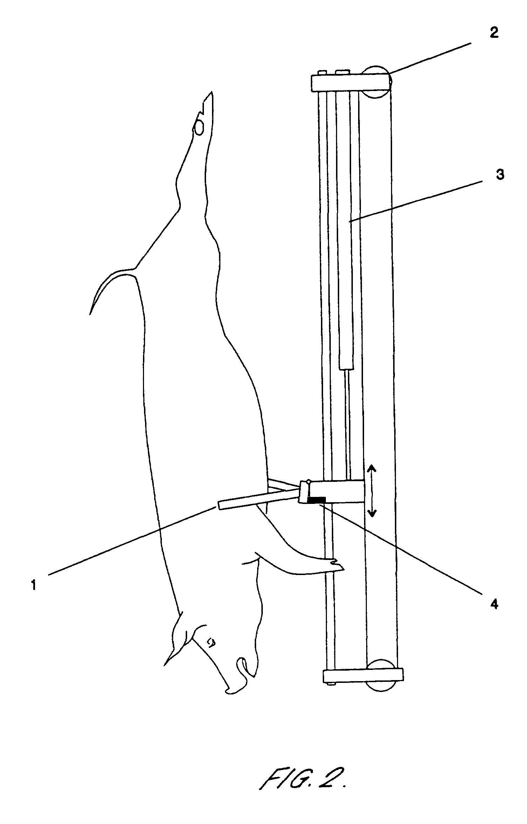

The height of the diaphragm and the organs above the floor varies from carcass to carcass, and this may affect the insertion of the various tools into the carcass and their functioning. In front of the work station there is preferably a measuring station for determination of the position of the diaphragm in proportion to a fixed point (the gambrel or the conveyor of the slaughtering line). The equipment of the measuring station may - as shown in fig. 2 - comprise two interangular, horizontal sensor arms 1. The arms are connected with a position indicator 2, whose signal is representative of the current position of the arms. By means of a drive cylinder 3 the arms are moved down along the suspended carcass, and when the arms catch the holes of the carcass behind the forelegs ("armpits"), they trigger a switch 4, starting a cycle of registration and computing. The arms may be hinged, so that they will swing upwards when they are affected by a certain upwards directed force. By this design, damage to the carcass is avoided and the measuring becomes more accurate.

In the cycle described, the signal of the position indicator is registered, and based upon this, the actual height of for instance the diaphragm can be computed automatically with good accuracy. When the carcass is to be processed in a following work station, the height of one or more tools is set in dependence on the measured/computed height of e.g. the diaphragm.

The part of the equipment which is to release the diaphragm and leaf fat (fig. 1) comprises a hoop or a set of semi-hoops, mainly having the shape of the inside of the carcass. The hoop is open on the section opposite the spinal column, e.g. with an opening of 1 to 5 cm. The loosener can be designed in a similar way as the known diaphragm and leaf fat loosener (cf. Danish Design Registration No. 63-1981 (Slagteriernes Forskningsinstitut)), but it may only have one set of hoops. The equipment automatically places the set of hoops of the loosener underneath the diaphragm, after the set has been led to a height determined on the basis of the measurement. By means of a drive cylinder, the set of hoops is then moved upwards, so that the diaphragm and leaf fat are loosened from the interior of the carcass, the intestines acting as a sort of retainer because of their weight. The equipment comprises a part for release of the intestines from the spinal column of the carcass, e.g. a cutting tool as described in Example 4 herein or of the design shown in EP-A -0 601 812 (University of Bristol). The tool is moved automatically along the spinal column of the carcass cutting the intestines free before, during or after the release of the diaphragm and leaf fat.

The intestines are then removed from the carcass by tilting it backwards. The removal may be promoted by extraction of a tool behind the intestines. The intestines fall down automatically into the gut pan, which a pan conveyor has placed underneath the abdominal opening of the carcass. At this time the intestines and the plucks will not be separated.

After the intestines have been removed and placed in the gut pan, the pan is moved on along the pan conveyor, while the conveyor rail of the slaughter line and the plucks conveyor are led in a course leading away from the pan conveyor. Simultaneously, the plucks conveyor moves the hook, which is fastened in the plucks, upwards to a level above the gut pan. The hook-end of the plucks is therefore moved upwards and the plucks are extracted from the thoracic cavity and stretched at 5 in fig.1.

The leaf fat is then separated manually from the diaphragm, or it can follow the plucks and be removed by a later operation. While the plucks are stretched, the connection between the plucks and the intestines is cut through. The working position is good, because the plucks have been pulled away from the intestines.

The free-cut intestines may be transferred to a fresh pan, as shown on the drawing, and moved by a usual pan conveyor, for further processing. The gall bladder is torn off the liver, and the plucks proceed on the plucks conveyor for inspection and further processing.

The evisceration process has now been completed as shown at 6 in fig.1. The carcass proceeds along the slaughter line for splitting and division into cuts.

The above subprocesses can be performed by 7-8 operators at a slaughtering rate of 320 carcasses per hour. The extraction of the tongue or the trachea/oesophagm to a hook on the plucks conveyor and the special conveyance of this in the plucks-removal area result in the operators avoiding to suspend the entire set of plucks onto the plucks conveyor, which is heavy work. Furthermore, the plucks are stretched, which facilitates the separation of the plucks and the intestines from each other.

Since the loosening of the diaphragm takes place while intestines and plucks are still connected and located inside the carcass, the loosening of diaphragm, leaf fat and intestines can be performed by machine, and the intestines subsequently removed to a gut pan by machine. This spares the operators this heavy work, which was so far performed in different working positions. Furthermore, contamination of carcass and plucks is avoided, since plucks and intestines are not cut apart until they have been removed from the carcass.

By a modification of the known subprocesses, which is fairly simple to implement, a new process is provided, with equipment which can release diaphragm, leaf fat and intestines, and remove these together, saving operators and heavy work. Moreover, the hygienic standard is improved. This is achieved by subprocesses known per se and without relaxing the control. The parts resulting from the new method are the same as those obtained by a traditional evisceration process.

### Example 3

This example describes a second embodiment of the method according to the invention, wherein a higher degree of mechanization by means of known automatic equipment is aimed at. In order to put the equipment to optimum use, the order of the subprocesses has been changed compared with the embodiment of example 2.

The process starts with cutting of the fat end, separation of the pubic bone, division of hams in the known way by use of commercial machinery.

Opening of the thoracic cavity and abdominal cavity is then done by means of known machinery. (To retain the intestines inside the carcass, the opening may only be partial in this subprocess; the full opening will then be performed immediately before the loosening of diaphragm, leaf fat, intestines and perhaps plucks).

The genitals are cut off in the usual, manual way, and two pre-cuts are performed in the diaphragm.

An operator cuts free jaws and tongue in the known way. Tongue with trachea and oesophagus is extracted from the carcass and suspended in a hook on the plucks conveyor. Alternatively, the trachea/oesophagus may be cut through and then placed on hook.

The loosening and removal of diaphragm, leaf fat and intestines are carried out in the same way as in example 2: The loosening is performed while the intestines are still inside the carcass. The set of hoops in the diaphragm and leaf fat loosener is placed automatically underneath the diaphragm and is then moved upwards loosening the diaphragm and leaf fat. The intestines are also released by machine by means of a cutting tool which is moved along the spinal column. The intestines are removed and placed in the gut pan while they are still connected with the plucks. The plucks, which are still suspended on the plucks conveyor via trachea and oesophagus, are extracted from the carcass by running the plucks conveyor upwards and away from the gut pan, thus extracting the plucks from the thoracic cavity and away from the carcass.

The leaf fat is then cut off the diaphragm, and a manual separation of the plucks and the intestines is carried out. The gall bladder is torn off the liver.

The evisceration has now been completed. The plucks are transported by the plucks conveyor to veterinary inspection and further processing. The intestines are transferred to another pan on a usual gut-pan conveyor, and the carcass proceeds along the slaughter line for splitting and division into cuts.

The above subprocesses can be performed by 4-5 operators at a slaughtering rate of 320 carcasses per hour. The reduction in the need for manpower compared with the process in example 2 is achieved by use of commercial equipment to cut the fat end, divide hams, and separate the pubic bone. Thus, a further lightening of work and mechanization is achieved while retaining the same advantages as those mentioned in example 2.

### Example 4

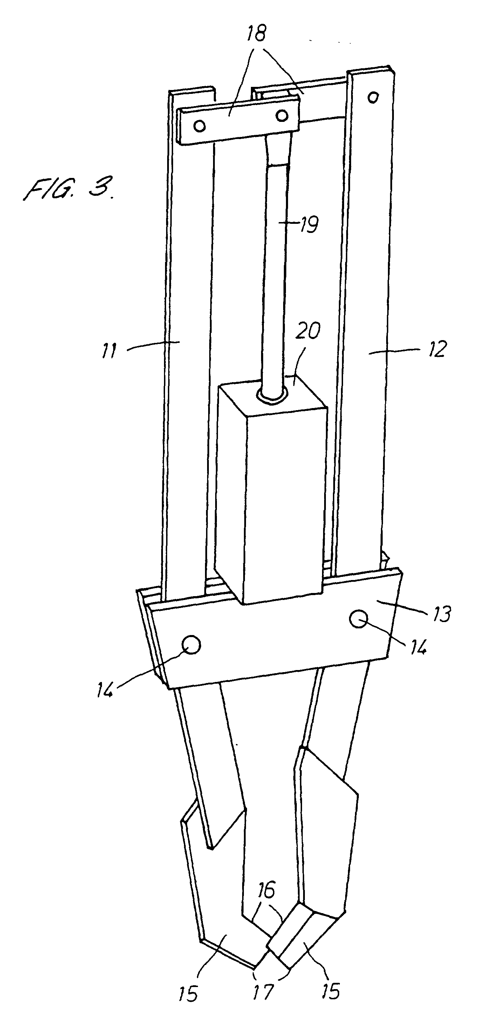

The tool of fig. 3 may serve for cutting free the connections of the diaphragm and the intestines to the spinal column in a carcass.

The tool, which has a shape like a pair of tongs, comprises two legs 11, 12, which are connected by means of an intermediate piece 13. In this piece there are two pins 14 which go through the legs, which can pivot on the pins. In one end of the legs there is a pair of jaws 15, which jaws in the closed position are joined, as illustrated, cutting off the room under the intermediate piece.

The jaws have a cutting edge 16 on the inside. On the outside they have a point 17, intended to perforate the diaphragm part of a carcass at the spinal column.

At the end opposite the jaws 15 each of the legs 11, 12 is provided with a hinge-section 18, which is pivotally connected with each of the legs and with a joint piston rod 19, belonging in an air cylinder unit 20. The housing of the unit is mounted on the intermediate piece 13. When the piston moves towards the bottom position, the distance between the ends of the legs at the hinge-sections 18 is reduced, so that the jaws 15 move apart and the tongs-like tool is opened.

The tool can be moved automatically between different positions by means of a manipulator or similar with a bracket that holds the tool in the intermediate piece 13.

In this way the tool can be used to cut through automatically the connections of the diaphragm and the intestines to the spinal column in a carcass, e.g. as follows:

After the abdomen of the carcass has been cut open, the fat end has been loosened, the hams have been divided, and the pubic bone has been separated, the tool with the jaw-end at the front is led into the abdominal gap of the carcass close to the fat end opening. The jaws of the tool are opened when the cylinder unit 20 is activate, so that the piston moves towards its lower position. The tool is then moved down along the spinal column, making the jaws 15 and the legs 11, 12 closest to the jaws grip the connections between the intestines and the spinal column, leading these upwards towards the intermediate piece 13.

The position of the diaphragm is pre-determined by means of a level-measuring device which determines the distance from the holes behind the elbows or forelegs of the carcass ("the armpits") to the lower edge of the gambrel, or a similar level of reference. The downwards movement of the tool continues until the points of the jaws 17 have reached the measured/calculated level for the diaphragm and a sufficient extra distance for them to perforate the diaphragm part at the spinal column.

The jaws 15 of the tool are now closed by activation of the piston of the cylinder unit in upwards direction. By this operation the edges 16 cut in the muscle, etc. of the diaphragm at the spinal column and the tool gathers the connections between the intestines and the spinal column together in the room enclosed by the jaws, the leg-ends closest to the jaws and the intermediate piece.

By means of the manipulator the tool is then moved upwards along the spinal column, by which operation the connections are cut through by the cutting edges 16 of the jaws, releasing the intestines from the spinal column. The tool is extracted from the carcass and then it is ready to repeat the operation on a new carcass.

In the same working station a loosening of the leaf fat and diaphragm of the carcass can be performed by means of a set of semi-hoops, which semi-hoops have the shape of the inside of the carcass and are inserted below the diaphragm and led upwards in the direction of the ham-end of the carcass. The free ends of the semi-loops opposite the spinal column can be at a considerable distance from each other.

The connections of the diaphragm and the intestines to the spinal column can be cut through before, during or after the loosening of the diaphragm and leaf fat.

## Claims

1. Method for evisceration of carcasses which are conveyed on a slaughter line suspended in gambrels, wherein the abdomen of the carcass is cut open, the hams are divided, the fat end is loosened, the intestines of the carcass are removed, the diaphragm and leaf fat are loosened, and the plucks are removed, **characterized in that** the diaphragm, the leaf fat and the intestines are loosened by machine while the intestines and the plucks are inside the carcass, the diaphragm and leaf fat being loosened by means of a structure with a set of hoops, which is automatically placed below the diaphragm and is then led upwards, so that diaphragm and leaf fat are loosened from the interior of the carcass, **in that** the intestines and the plucks are removed from the carcass in one piece, after the diaphragm, leaf fat and intestines have been loosened, and **in that** the intestines and the plucks are then separated from each other by cutting.

2. Method according to Claim 1, **characterized in that** the intestines are placed, during the removal operation, in a gut pan placed underneath the abdomen of the carcass.

3. Method according to Claim 1, **characterized in that** the plucks are removed from the carcass while or after the intestines are placed in a pan.

4. Method according to Claim 1, **characterized in that** the plucks, after the removal are pulled up above the level of the pan, and that the plucks and the intestines are then separated by cutting the connection between the plucks and the intestines.

5. Method according to Claim 1, **characterized in that** the trachea and oesophagus are cut through, while the intestines and the plucks are still inside the carcass.

6. Method according to Claim 5, **characterized in that** the trachea/oesophagus are extracted from the carcass immediately after having been cut, and then suspended on a hook that is conveyed by a plucks conveyor.

7. Method according to Claim 6, **characterized in that** after the removal, the hook is led to such a distance from the gut pan that the plucks are stretched between the hook and the intestines, after which the connection between the plucks and the intestines is cut through.

8. Method according to Claim 1, **characterized in that** the following subprocesses 1-4 are carried out:
1. diaphragm, leaf fat, intestines and perhaps plucks are loosened by means of machinery,
2. intestines are removed from the carcass to a gut pan, while retaining the connection between the plucks and the intestines,
3. the plucks are removed from the carcass, and
4. the plucks and the intestines are separated outside the carcass.

9. Method according to Claim 1, **characterized in that** the following subprocesses 1-6 are carried out:
1. trachea and oesophagus are cut through,
2. trachea/oesophagus are extracted to a hook on the plucks conveyor,
3. diaphragm, leaf fat, intestines and perhaps plucks are loosened by means of machinery,
4. intestines are removed from the carcass to a gut pan by means of machinery, while retaining the connection between the plucks and the intestines,
5. the plucks are removed from the carcass, and
6. the plucks and the intestines are separated outside the carcass.

10. Method according to Claim 1, **characterized in that** diaphragm, leaf fat, intestines and perhaps plucks are loosened, and intestines are removed to a gut pan by means of machinery in the same work station, and the fat end is cut, the pubic bone is separated and the hams divided preferably by machinery in another work station, which is placed up-stream of the work station mentioned first.

11. Method according to Claim 1, **characterized in that** the intestines and the diaphragm part at the spinal column are loosened by means of another structure with a cutting tool which is automatically moved along the spinal column of the carcass, cutting free the intestines and cutting through the diaphragm part before, during or after loosening of diaphragm and leaf fat.

12. Method according to Claim 1, **characterized in that** for the loosening process there is used a set of hoops which are open at the section opposite the spinal column of the carcass over a distance of 1 to 5 cm.

13. Method according to Claim 1, **characterized in that** for the process of loosening the intestines and the diaphragm part at the spinal column there is used a tool mainly having the shape of a pair of tongs with jaws which can be closed and have cutting edges on the inwardly directed sides of the jaws.

14. Method according to Claim 13, **characterized in that** the tool in its open position is led with the jaws at the front down to the diaphragm part at the spinal column of the carcass, that the jaws of the tool are closed, and that the tool is then led upwards along the spinal column cutting through the connections of the diaphragm and the intestines to the spinal column.

15. Method according Claim 13, **characterized in that** the cutting edges (16) of the inwardly directed sides of the jaws form a "V" in the closed position of the jaws.

16. Method according to Claim 13, **characterized in that** the jaws of the tool have a point (17) or a sharp edge on the outside.

17. Method according to Claim 13, **characterized in that** the tool has a drive device (20) to move the legs of the tongs beween an open position, in which the jaws (15) of the tongs are at a distance from each other, and a closed position, in which the jaws are close together.

18. Method according to Claim 1, **characterized in that** the position of the holes behind the forelegs, i.e. the armpits, of the carcass is measured automatically, and that the set of hoops is automatically placed in its initial and/or working positions based on the measurement.

19. Method according to Claim 18, **characterized in that** the measurement is performed by means of sensor arms (1), which are connected to a position indicator (2) and are moved automatically down along the abdominal side of the carcass, said sensor arms being designed to send a signal registering the present signal of the position indicator at the moment of contact when the sensor arms contact the holes behind the forelegs of the carcass.

## Patentansprüche

1. Verfahren zum Ausnehmen von Karkassen, die in einer Schlachtstraße oder -linie in Fleischhaken aufgehängt gefördert werden, wobei der Bauch der Karkasse aufgeschnitten wird, die Hinterkeulen zerteilt, das Fettende gelöst, die Eingeweide entfernt, das Diaphragma und Bauchfett gelöst und die Innereien entfernt werden, **dadurch gekennzeichnet, daß** das Diaphragma, das Bauchfett und die Eingeweide maschinell gelöst werden, während sich die Eingeweide und die Innereien in der Karkasse befinden, das Diaphragma und das Bauchfett durch eine Anordnung mit einem Satz Reifen gelöst werden, der automatisch unter dem Diaphragma plaziert und dann aufwärts geführt wird, so daß Diaphragma und Bauchfett vom Inneren der Karkasse gelöst werden; daß die Eingeweide und die Innereien von der Karkasse in einem Stück entfernt werden, nachdem Diaphragma, Bauchfett und Eingeweide gelöst worden sind; und daß die Eingeweide und die Innereien dann voneinander durch Schneiden getrennt werden.

2. Verfahren nach Anspruch 1, **dadurch gekennzeichnet, daß** die Eingeweide während des Entfernungsvorgangs in eine Eingeweidepfanne gelegt werden, die unter dem Bauch der Karkasse plaziert ist.

3. Verfahren nach Anspruch 1, **dadurch gekennzeichnet, daß** die Innereien von der Karkasse entfernt werden, während oder nachdem die Eingeweide in eine Pfanne gelegt werden oder wurden.

4. Verfahren nach Anspruch 1, **dadurch gekennzeichnet, daß** die Innereien nach dem Entfernen über das Niveau der Pfanne hochgezogen werden, und daß die Innereien und die Eingeweide dann durch Zerschneiden der Verbindung zwischen den Innereien und den Eingeweiden getrennt werden.

5. Verfahren nach Anspruch 1, **dadurch gekennzeichnet, daß** die Luftröhre und die Speiseröhre durchgeschnitten werden, während sich die Eingeweide und die Innereien noch in der Karkasse befinden.

6. Verfabren nach Anspruch 5, **dadurch gekennzeichnet, daß** die Luftröhre/Speiseröhre sofort, nachdem sie durchgeschnitten wurden, aus der Karkasse herausgenommen und dann an einem Haken aufgehängt werden, der von einem Innereienförderer gefördert wird.

7. Verfahren nach Anspruch 6, **dadurch gekennzeichnet, daß** der Haken nach dem Entfernen in einen solchen Abstand von der Eingeweidepfanne gebracht wird, daß die Innereien zwischen dem Haken und den Eingeweiden ausgestreckt werden, wonach die Verbindung zwischen den Innereien und den Eingeweiden durchgeschnitten wird.

8. Verfahren nach Anspruch 1, **dadurch gekennzeichnet, daß** die folgenden Unterprozesse 1 - 4 ausgeführt werden:
1. Diaphragma, Bauchfett, Eingeweide und gegebenenfalls Innereien werden maschinell gelöst,
2. Eingeweide werden aus der Karkasse in eine Eingeweidepfanne entfernt, während die Verbindung zwischen den Innereien und den Eingeweiden beibehalten bleibt,
3. die Innereien werden aus der Karkasse entfernt, und
4. die Innereien und die Eingeweide werden außerhalb der Karkasse getrennt.

9. Verfahren nach Anspruch 1, **dadurch gekennzeichnet, daß** die folgenden Unterprozesse 1 - 6 ausgeführt werden:
1. Luftröhre und Speiseröhre werden durchschnitten,
2. Luftröhre/Speiseröhre werden auf einen Haken auf dem Innereienförderer herausgezogen,
3. Diaphragma, Bauchfett, Eingeweide und gegebenenfalls Innereien werden maschinell gelöst,
4. Eingeweide werden mascbinell aus der Karkasse in eine Eingeweidepfanne entfernt, während die Verbindung zwischen den Innereien und den Eingeweiden beibehalten bleibt,
5. die Innereien werden aus der Karkasse entfernt, und
6. die Innereien und die Eingeweide werden außerhalb der Karkasse getrennt.

10. Verfahren nach Anspruch 1, **dadurch gekennzeichnet, daß** Diaphragma, Bauchfett, Eingeweide und gegebenenfalls Innereien gelöst und die Eingeweide maschinell in derselben Arbeitsstation in eine Eingeweidepfanne entfernt werden und das Fettende geschnitten wird, das Schambein abgetrennt wird und die Schinken bevorzugt maschinell in einer anderen Arbeitsstation geteilt werden, die stromaufwärts zu der zuerst genannten Arbeitsstation plaziert ist.

11. Verfähren nach Anspruch 1, **dadurch gekennzeichnet, daß** die Eingeweide und das Diaphragmateil an der Wirbelsäule durch eine weitere Anordnung mit einem Schneidewerkzeug gelöst werden, das automatisch entlang der Wirbelsäule der Karkasse bewegt wird, wodurch es die Eingeweide freischneidet und das Diaphragmateil durchschneidet, bevor, während oder nachdem Diaphragma und Bauchfett gelöst werden oder wurden.

12. Verfahren nach Anspruch 1, **dadurch gekennzeichnet, daß** für den Löseprozeß ein Satz Reifen benutzt wird, die am Abschnitt gegenüber der Wirbelsäule der Karkasse über einen Abstand von 1 bis 5 cm offen sind.

13. Verfahren nach Anspruch 1, **dadurch gekennzeichnet, daß** für den Löseprozeß der Eingeweide und des Diaphragmateils an der Wirbelsäule ein Werkzeug benutzt wird, das hauptsächlich die Form einer Zange mit Backen hat, welche geschlossen werden können und auf den nach innen gerichteten Seiten der Backen Schneidkanten aufweisen.

14. Verfahren nach Anspruch 13, **dadurch gekennzeichnet, daß** das Werkzeug in seiner geöffneten Position mit den Backen vorn nach unten auf das Diaphragmateil an der Wirbelsäule der Karkasse geführt wird, daß die Backen des Werkzeugs geschlossen werden und daß das Werkzeug dann entlang der Wirbelsäule nach oben geführt wird, wobei es die Verbindungen des Diaphragmas und der Eingeweide zur Wirbelsäule durchschneidet.

15. Verfahren nach Anspruch 13, **dadurch gekennzeichnet, daß** die Schneidkanten (16) der nach innen gerichteten Seiten der Backen in der geschlossenen Position der Backen ein "V" bilden.

16. Verfahren nach Anspruch 13, **dadurch gekennzeichnet, daß** die Backen des Werkzeugs außen eine Spitze (17) oder eine scharfe Kante aufweisen.

17. Verfahren nach Anspruch 13, **dadurch gekennzeichnet, daß** das Werkzeug eine Antriebseinrichtung (20) aufweist, um die Schenkel der Zange zwischen einer geöffneten Position, in der die Backen (15) der Zange voneinander beabstandet sind, und einer geschlossenen Position, in der die Backen nahe zusammen sind, zu bewegen.

18. Verfahren nach Anspruch 1, **dadurch gekennzeichnet, daß** die Position der Löcher hinter den Vorderbeinen, d.h. den Achselhöhlen, der Karkasse automatisch gemessen wird und daß der Satz Reifen, basierend auf der Messung, automatisch in seine Ausgangs- und/oder Arbeitspositionen gebracht wird.

19. Verfahren nach Anspruch 18, **dadurch gekennzeichnet, daß** die Messung durch Sensorarme (1) durchgeführt wird, die mit einem Positionsanzeiger (2) verbunden sind und automatisch nach unten entlang der Bauchseite der Karkasse geführt werden, wobei die Sensorarme so konstruiert sind, daß sie ein Signal senden, das das derzeitige Signal des Positionsanzeigers im Moment des Kontakts registriert, wenn die Sensorarme die Löcher hinter den Vorderbeinen der Karkasse kontaktieren.

## Revendications

1. Procédé d'éviscération de carcasses, qui sont convoyées sur une chaîne d'abattage en étant suspendues à des crochets de boucherie, selon lequel on ouvre en découpant l'abdomen de la carcasse, on divise les jarrets, on détache l'extrémité grasse, on retire les intestins de la carcasse, on détache le diaphragme et la couche de graisse et on retire la fressure, **caractérisé en ce que** le diaphragme, la couche de graisse et les intestins sont détachés à l'aide d'une machine, alors que l'intestin et la fressure sont à l'intérieur de la carcasse, le diaphragme et la couche de couche de graisse étant détachés au moyen d'une structure comportant un ensemble d'arceaux, qui est placée automatiquement au-dessous du diaphragme puis est soulevée de sorte que le diaphragme et la couche de graisse sont détachés de l'intérieur de la carcasse, **en ce que** l'intestin et la fressure sont retirés de la carcasse d'un seul tenant, une fois que le diaphragme, la couche de graisse et l'intestin ont été détachés, et **en ce que** l'intestin et la fressure sont ensuite séparés l'un de l'autre par découpage.

2. Procédé selon la revendication 1, **caractérisé en ce que** pendant l'opération d'enlèvement, l'intestin est placé dans un bac de réception de l'intestin située au-dessous de l'abdomen de la carcasse.

3. Procédé selon la revendication 1, **caractérisé en ce que** la fressure est retirée de la carcasse pendant ou après que l'intestin est placé dans un bac.

4. Procédé selon la revendication 1, **caractérisé en ce qu'**après son retrait, la fressure est soulevée au-dessus du niveau du bac et que la fressure et l'intestin sont ensuite séparés par sectionnement de la liaison entre la fressure et l'intestin.

5. Procédé selon la revendication 1, **caractérisé en ce qu'**on sectionne la trachée et l'oesophage alors que l'intestin et la fressure sont encore à l'intérieur de la carcasse.

6. Procédé selon la revendication 5, **caractérisé en ce que** l'on extrait la trachée/l'oesophage de la carcasse juste après qu'ils ont été sectionnés, puis on les suspend à un crochet qui est convoyé par un convoyeur à fressure.

7. Procédé selon la revendication 6, **caractérisé en ce qu'**après le retrait, le crochet est amené à une distance telle du bac pour l'intestin que la fressure est étirée entre le crochet et l'intestin, à la suite de quoi le lien entre la fressure et l'intestin est sectionné.

8. Procédé selon la revendication 1, **caractérisé en ce que** les opérations secondaires suivantes 1-4 sont exécutées:
1. on détache le diaphragme, la couche de graisse, l'intestin et peut-être la fressure au moyen d'une machine;
2. on retire l'intestin de la carcasse pour les amener dans un bac pour l'intestin, tout en maintenant la liaison entre la fressure et l'intestin;
3. on retire la fressure de la carcasse; et
4. on sépare la fressure et l'intestin à l'extérieur de la carcasse.

9. Procédé selon la revendication 1, **caractérisé en ce que** les étapes secondaires suivantes 1-6 sont exécutées:
1. on sectionne la trachée et l'oesophage,
2. on extrait la trachée/l'oesophage en les amenant à un crochet sur le convoyeur pour la fressure,
3. on détache le diaphragme, la couche de graisse, les intestins et peut-être la fressure à l'aide d'une machine,
4. on retire les intestin de la carcasse pour les amener à un bac pour les intestins, à l'aide d'une machine, tout en maintenant la liaison entre la fressure et les intestins,
5. on retire la fressure de la carcasse, et
6. on sépare la fressure et les intestins à l'extérieur de la carcasse.

10. Procédé selon la revendication 1, **caractérisé en ce qu'**on détache le diaphragme, la couche de graisse et l'intestin et peut-être la fressure et qu'on retire les intestins en direction d'un bac pour les intestins à l'aide d'une machine sur le même poste de travail, qu'on sectionne l'extrémité grasse, qu'on sépare l'os pubien et qu'on divise les jarrets, de préférence au moyen d'une machine dans un autre poste de travail, qui est disposé en amont du poste de travail mentionné en premier.

11. Procédé selon la revendication 1, **caractérisé en ce que** les intestins et la partie du diaphragme au niveau de la colonne vertébrale sont détachés au moyen d'une autre structure comportant un outil de coupe, qui est déplacé automatiquement le long de la colonne vertébrale de la carcasse, et qui détache par sectionnement les intestins, sectionne la partie du diaphragme, avant, pendant ou après le détachement du diaphragme et de la couche de graisse.

12. Procédé selon la revendication 1, **caractérisé en ce que** pour le processus de détachement, on utilise un ensemble d'arceaux qui sont ouverts dans la section de la carcasse à l'opposé de la colonne vertébrale, sur une distance de 1 à 5 cm.

13. Procédé selon la revendication 1, **caractérisé en ce que** pour le processus de détachement de l'intestin et de la partie du diaphragme au niveau de la colonne vertébrale, on utilise un outil possédant principalement la forme d'une paire de tenailles comportant des mâchoires qui peuvent être fermées et comportent des bords de coupe sur leurs côté, tournés vers l'intérieur.

14. Procédé selon la revendication 13, **caractérisé en ce que** dans sa position ouverte, l'outil est guidé les mâchoires en avant jusqu'à la partie du diaphragme au niveau de la colonne vertébrale de la carcasse, que les mâchoires de l'outil sont fermées et que l'outil est ensuite soulevé le long de la colonne vertébrale, sectionnant ainsi les liaisons du diaphragme et de l'intestin avec la colonne vertébrale.

15. Procédé selon la revendication 13, **caractérisé en ce que** les bords de coupe (16) des côtés, des mâchoires dirigés vers l'intérieur forment un "V" lorsque les mâchoires sont dans la position fermée.

16. Procédé selon la revendication 13, **caractérisé en ce que** les mâchoires de l'outil possèdent une pointe (17) ou une arête vive sur le côté extérieur.

17. Procédé selon la revendication 13, **caractérisé en ce que** l'outil comporte un dispositif d'entraînement (20) servant à déplacer les branches des tenailles entre une position ouverte, dans laquelle les mâchoires (15) des tenailles sont situées à distance l'une de l'autre, et une position fermée, dans laquelle les tenailles sont proches l'une de l'autre.

18. Procédé selon la revendication 1, **caractérisé en ce que** la position des trous en arrière des pattes avant, c'est-à-dire les aisselles, de la carcasse, est mesurée automatiquement et que l'ensemble d'arceaux est disposé automatiquement dans sa position initiale et/ou dans sa position de travail sur la base de cette mesure.

19. Procédé selon la revendication 18, **caractérisé en ce que** la mesure est exécutée à l'aide de bras de détection (1), qui sont connectés à un indicateur de position (2) et sont déplacés automatiquement le long du côté abdominal de la carcasse, lesdits bras de détection étant conçus pour envoyer un signal avec enregistrement du présent signal de l'indicateur de position au moment du contact, lorsque les bras de détection viennent en contact avec les trous situés en arrière des pattes avant de la carcasse.
